# EUROPEAN PATENT SPECIFICATION

(11) **EP 2 246 202 B1**
(45) Date of publication and mention of the grant of the patent: **30.05.2012**
(21) Application number: 10172002.7
(22) Date of filing: 09.10.2008
(51) Int. Cl.: B60C 9/09

(54) **Floating two-ply tire**
Schwebender zweilagiger Reifen
Pneu flottant à deux plis

(30) Priority: 15.10.2007 US 872136
(43) Date of publication of application: 03.11.2010
(62) Divisional of application: 08166271.0
(73) Proprietor: The Goodyear Tire & Rubber Company, Akron, OH 44316-0001 (US)
(72) Inventor: Neubauer, Robert Anthony, Medina, OH 44256 (US); Wright, Thomas Allen, Uniontown, OH 44685 (US)
(74) Representative: Kutsch, Bernd

(56) References cited:
- EP-A- 0 650 855
- EP-A- 1 475 249
- DE-A1- 1 921 750
- NL-A- 8 601 104
- US-A- 3 481 386
- US-A- 3 509 930
- US-A1- 2004 123 928

## Description

### Description of the Related Art

It is known in the art to provide monoply and two-ply tires for vehicles.

US-A- 7,017,635 discloses a pneumatic tire for trucks having reduced weight and less material usage. The present invention utilizes an outside-in radial ply construction, which aids to torque the tire bead into the rim of the wheel to which it is mounted and allows the rim to provide greater support for the tire. The size of the bead may be reduced, permitting a reduction in the amount of rubber and reinforcement around and above the bead.

US-A- 6,536,495 discloses a two-ply radial runflat tire having a belt structure, a ply structure, two inextensible beads and two wedge-insert reinforced sidewalls. The outer ply is reinforced by high-modulus, light-weight aramid. The aramid reinforcement material of the outer ply is clamped around the beads. The outer ply is prestressed in tension during manufacture of the tire. The resultant tire is light in weight and resists upward buckling of the tread during runflat operation.

US-A- 6,527,025 discloses a pneumatic tire comprising a carcass ply extending between bead portions and including a topping rubber layer, the topping rubber layer facing the inside of the tire and made of a butyl rubber compound. The height of a bead apex, which is disposed between a carcass ply turnup portion and main portion in each bead portion, can be reduced into a range of from 10 to 20 mm, and in this case, the carcass ply turnup portion is extended radially outwardly beyond the radially outer end of the bead apex so as to adjoin the carcass ply main portion.

US-A- 6,263,935 discloses a radial ply pneumatic tire having a carcass with a bead portion, a carcass reinforcing structure, and a bead filler. The carcass reinforcing structure has at least two structures with cords which extend to each bead. In a preferred embodiment of the invention, the tire carcass includes elastomeric first and second fillers, the first filler being located between the first ply structure and the innerliner of the tire, and the second filler being located between the first and second ply structures. The fillers stiffen the sidewalls to permit the tire to be driven while uninflated.

US-A- 3,509,930 describes a tire wherein the carcass comprises a continuous radial inner ply structure and an outer ply structure wherein the cords in the section of the outer ply structure may be none-radially inclined at an angle ranging from -45°C to +45° to the radial direction in one of the sections of the outer ply structure.

### Summary of the Invention

The invention relates to a tire carcass according to claim 1 and a tire according to claim 15.

Dependent claims refer to preferred embodiments of the invention.

According to one aspect of the invention, the carcass has a center line parallel with the bead core.

According to one embodiment of this invention, the right side of the second radial ply is at an angle of at least approximately 105º with respect to the center line, the left side of the second radial ply is at an angle of at least approximately -105º with respect to the center line, the right side of the third radial ply is at an angle of at least approximately 105º with respect to the center line, and the left side of the third radial ply is at an angle of at least approximately -105º with respect to the center line.

According to another embodiment of this invention, the right side of the second radial ply is at an angle of between at least approximately 75º and approximately 105º with respect to the center line, the left side of the second radial ply is at an angle of between at least approximately -75º and approximately -105º with respect to the center line, the right side of the third radial ply is at an angle of between at least approximately -75º and approximately -105º with respect to the center line, and the left side of the third radial ply is at an angle of between at least approximately -75º and approximately -105º with respect to the center line.

According to another embodiment of this invention, the right side of the second radial ply is at an angle of at least 90º with respect to the center line, the left side of the second radial ply is at an angle of at least -90º with respect to the center line, the right side of the third radial ply is at an angle of at least 90º with respect to the center line, and the left side of the third radial ply is at an angle of at least -90º with respect to the center line.

One advantage of this invention is that rim pinch is reduced versus a conventional one-ply tire.

Another advantage of this invention is that casing durability is increased versus a conventional one-ply tire.

Yet another possible advantage of this invention is increased tuning potential by allowing the split ply layer to be radially angled to gain lateral stiffness.

Yet another possible advantage of this invention is reduced tire weight versus a conventional 2-ply tire.

Another possible advantage of this invention is reduced cost versus a conventional 2-ply tire.

Still another advantage of this invention is reduced rolling resistance versus a conventional 2-ply tire.

### Brief Description of the Drawings

FIGURE 1 is a cross-section of the ply section of a tire showing the two-ply construction;
FIGURE 2 is a cross-section of the ply-section of a tire, showing belts and the two-ply construction;
FIGURE 3 is a cross-section of the ply-section of a tire, showing the three-ply construction;
FIGURE 4 is a top view of the carcass, showing angles of the plies;
FIGURE 5 is a top view of the carcass, showing angles of the plies;
FIGURE 6 is a top view of the carcass, showing angles of the plies;
FIGURE 7 is a top view of the carcass, showing angles of the plies;
FIGURE 8 is a top view of the carcass, showing angles of the plies;
FIGURE 9 is a top view of the carcass, showing angles of the plies; and,

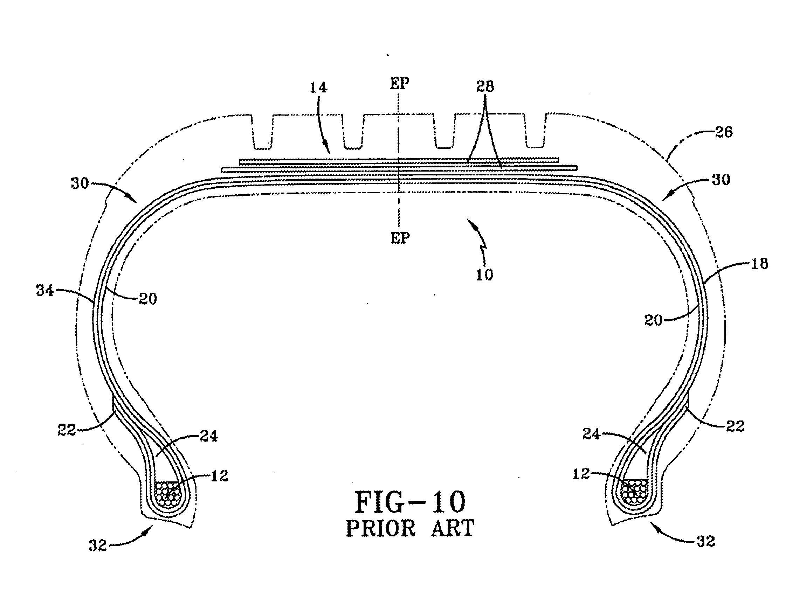

FIGURE 10 is a perspective view of a prior art two-ply tire.

### Definitions

"Axial" and "axially" mean the lines or directions that are parallel to the axis of rotation of the tire.

"Carcass" means the tire structure apart from the belt structure, tread, undertread, and sidewall rubber over the plies, but including bead cores.

"Carcass crown portion" means a portion of the carcass over which the crown is placed.

"Crown" or "tire crown" means the tread, tread shoulders, and the immediately adjacent portions of the sidewalls.

"Radial" and "radially" mean directions toward or away from the axis of rotation of the tire.

### Detailed Description of the Invention

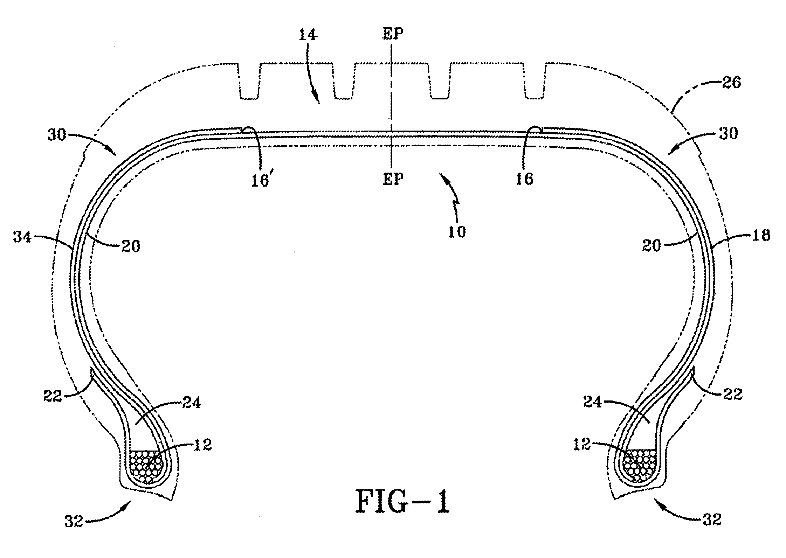

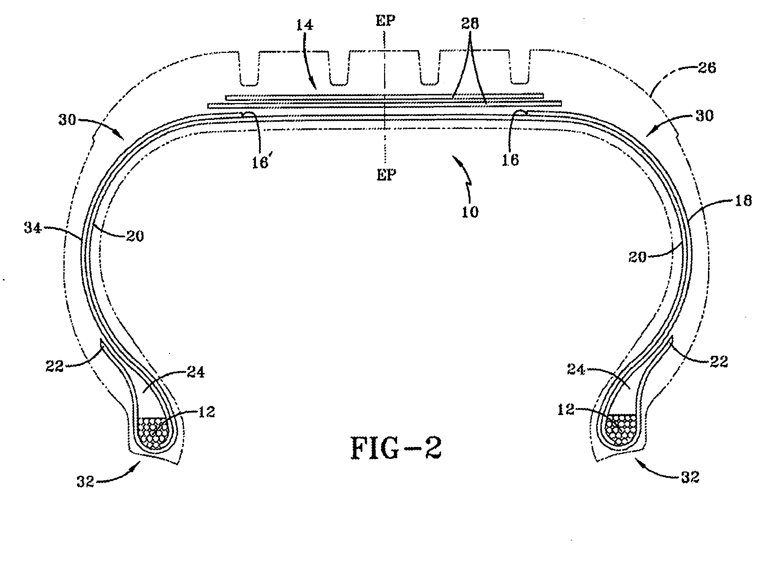

FIGURE 1 shows a tire carcass 10, having two beads 12, a carcass crown portion 14 (wherein the carcass crown portion 14 has two edges 16, 16'), a first radial ply 20, a second radial ply having a right side 18 and a left side 34, turn-up ends 22, apexes 24, shoulders 30, and bead regions 32. The bead regions 32 have a pair of axially spaced beads 12 around which are wrapped turn-up ends 22. The apexes 24 are sandwiched between the main body of the carcass 10 and the turn-up ends 22. The carcass 10 is surrounded by tread 26. In FIGURES 2-4, the carcass 10 is shown with belts 28 overlaying the carcass crown portion 14.

With continuing reference to FIGURES 1 and 2, the first radial ply 20 is a continuous ply that has shoulders 30 and extends around the beads 12 and ends in turn-up ends 22. The carcass crown portion 14 is defined by the edges 16, 16', and the right side 18 of second radial ply and the left side 34 of the second radial ply begin at the edges 16, 16', and extend downwardly toward the beads 12. The right and left sides 18, 34 of the second radial ply overlay the first radial ply 20, such that the sidewall region of the carcass 10 is two-ply in this embodiment.

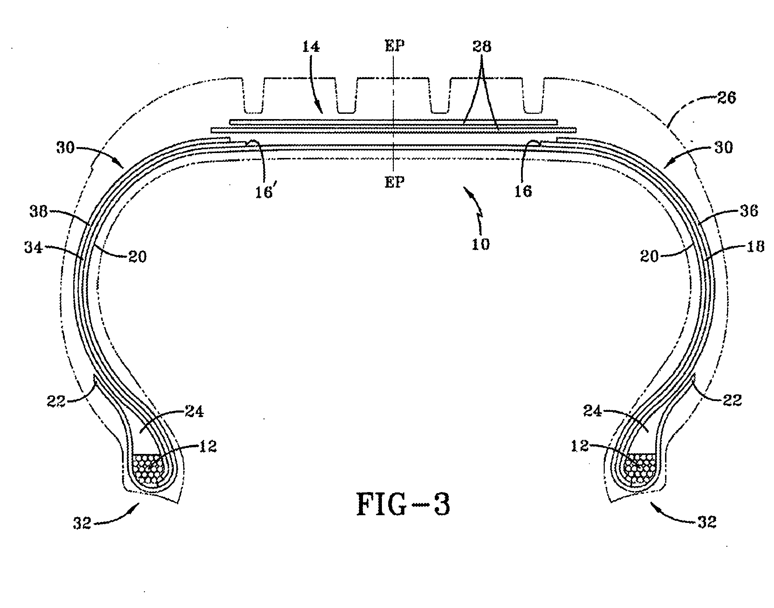

With reference now to FIGURE 3, another embodiment of the invention is shown, wherein the carcass 10 has a third radial ply having a right side 36, which begins at the first edge 16 of the crown carcass portion 14, overlays the right side 18 of the second radial ply, and extends downwardly to the bead 12. The left side 38 of the third radial ply, which begins at the second edge 16' of the crown carcass portion 14, overlays the left side 34 of the second radial ply, and extends downwardly to the bead 12. The configuration in this embodiment creates a three-ply construction on the sidewalls. As can be seen in FIGURE 3, in one embodiment, the sides 36, 38 of the third ply overlay the second radial ply in a staggered fashion. The third radial ply is slightly shorter than the second radial ply. The plies are also staggered at the bead regions 32 as well.

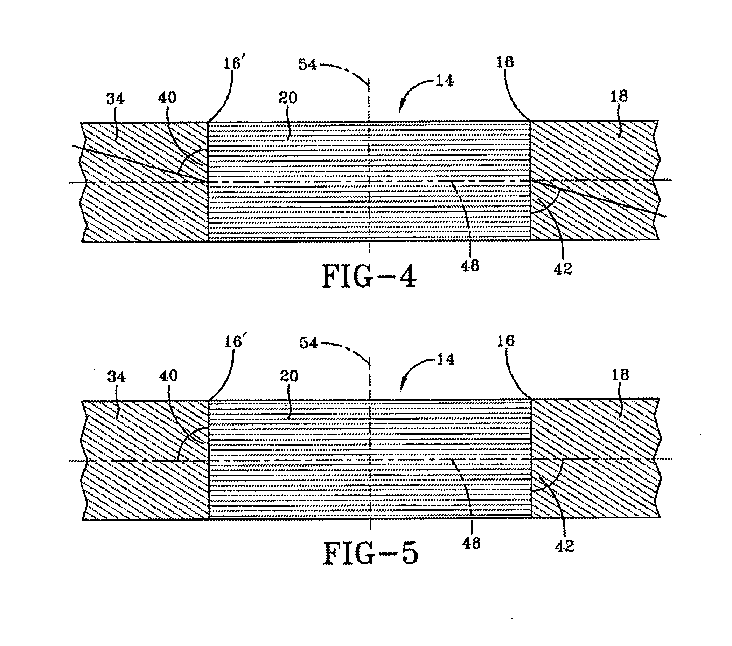

With reference now to FIGURES 4-6, the FIGURES show the tire carcass 10 from the top, showing the angles of the plies, i.e. the angles of the parallel cords in the respective ply. The sides 18, 34 can be at a variety of angles. The rights side 18 has a first edge and the left side 34 has a first edge. A centerline parallel with the bead cores 54 is shown in the FIGURES, and the angles 40, 42 are shown with respect to the centerline 54. In one embodiment, the angles 40, 42 are -75º and 75º, respectively, with respect to the centerline 54. The angles 40, 42 represent the angle of the sides 18, 34. In another embodiment, the angles 40, 42 are both 90º, and in another embodiment, the angles 40, 42 are - 105º and 105º, respectively, with respect to the centerline 54. It is to be understood that in this embodiment, angle 40 can be any angle between approximately -75º and approximately -105º and angle 42 can be any angle between approximately 75º and approximately 105º. The FIGURES also show a perpendicular centerline 48 which is perpendicular to centerline 54.

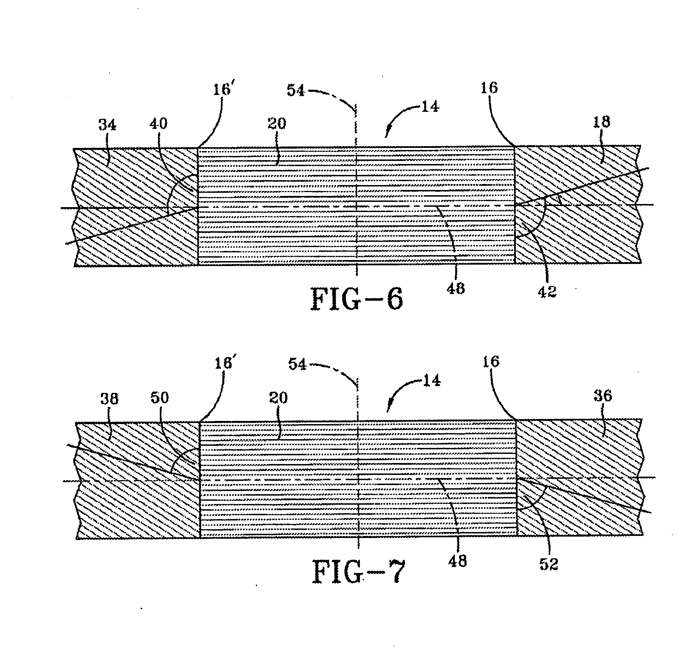

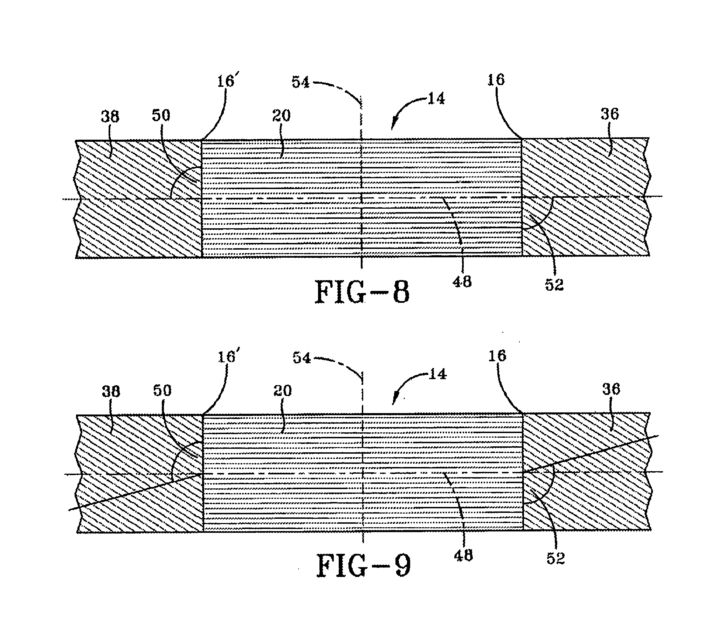

With reference now to FIGURES 7-9, the sides 36, 38 can be at a variety of angles. The right side 36 has a first edge and the left side 38 has a first edge. A centerline 54 is shown in the FIGURES, and the angles 50, 52 are shown with respect to the centerline 54. In one embodiment, the angles 50, 52 are -75º and 75º, respectively, with respect to the centerline 54. The angles 50, 52 represent the angle of the sides 36, 38. In another embodiment, the angles 50, 52 are both 90º, and in another embodiment, the angles 50, 52 are -105º and 105º, respectively, with respect to the centerline 54. It is to be understood that in this embodiment, angle 50 can be any angle between approximately -75º and approximately -105º and angle 52 can be any angle between approximately 755º and approximately 105º.

With continuing reference to FIGURES 7-9, in this embodiment, the sides 36, 38 overlay the sides 18, 34. In this embodiment, it is to be understood that angle 40 can be any angle between approximately -75º and approximately -105º and angle 42 can be any angle between approximately 75º and approximately 105º. It is also to be understood that the angles 40, 42 can either be the same as the angles 50, 52 or they can be different.

With reference now to FIGURES 1-9, the plies can be made of either similar or dissimilar materials, but the type of material is not intended to be a limitation to this invention, and it is to be understood that the plies could be made of any material chosen using sound engineering judgment.

With continuing reference to FIGURES 1-9, it is to be understood that the plies can be of any length, including extending to the turn-up ends 22, as long as the sides 18, 34 do not connect to each other and sides 36, 38 do not connect to each other. It is also to be understood that the invention is not limited to three plies, but any number of plies could be used, as long as chosen using sound engineering judgment. It is also to be understood that the tire could have two or more continuous plies and two or more non-continuous plies. It is also to be understood that the sides 18, 34 of the second ply and the sides 36, 38 of the third ply, in one embodiment, do not wrap around the bead core 12, but extend to the bead core 12. The sides 18, 34, 36, 38 can extend to the bead core 12, partially around the bead core 12, or all the way around the bead core 12. It is also to be understood that the sides 18, 34, 36, 38 can extend beyond the edges 16, 16' of the carcass crown portion 14. Although in one embodiment, the sides 18, 34, 36, 38 begin at approximately the edge 16, 16', it is to be understood that this invention encompasses the sides 18, 34, 36, 38 extending substantially beyond the edges 16, 16' as long as the second and third plies do not become a continuous ply.

## Claims

1. A tire carcass comprising a first radial ply (20) with shoulder portions and lateral edge portions, each of the lateral edge portions being wrapped around a respective first or second bead core (12) of a respective first or second bead; a carcass crown portion (14) having a first edge (16) and a second edge (16'), and a non-continuous second radial ply, the second radial ply having a first side (18) extending from the first edge (16) or approximately the first edge (16) of the carcass crown portion (14) downwardly to the first bead and a second side (34) extending from the second edge (16') or approximately the second edge (16') of the carcass crown portion (14) downwardly to the second bead, **characterized in that** the first side (18) of the second radial ply (18, 34) is at an angle of between 75º to 105º or at least approximately of between 75º to 105º with respect to a center line (54) of the carcass parallel with the bead cores (32) and the second side (34) of the second radial ply is at an angle of between -75º to -105º or at least approximately of between -75º to -105º with respect to said center line (54).

2. The tire of claim 1 wherein the tire carcass (10) further comprises a non-continuous third radial ply, the third radial ply having a first side (36) extending from the first edge (16) or approximately the first edge (16) of the carcass crown portion (14) and downwardly to the first bead and a second side (38) extending from the second edge (16') or approximately the second edge (16') of the carcass crown portion (14) downwardly to the second bead, the first side (36) of the third radial ply overlaying or overlaying in a staggered fashion the first side (18) of the second radial ply and the second side (38) of the third radial ply overlaying or overlaying in a staggered fashion the second side (34) of the second radial ply.

3. The tire of claim 2 wherein the first side (36) of the third ply overlays first side (18) the second radial ply in a staggered fashion and wherein the second side (38) of the third ply overlays second side (34) the second radial ply in a staggered fashion, and, optionally, wherein the third ply and the second ply are staggered at the bead regions (32) as well.

4. The tire of claim 2 wherein the first side (36) of the third ply extends to the first bead but does not wrap around the first bead core (12), wherein the second side (38) of the third ply extends to the second bead but does not wrap around the second bead core (12), wherein the first side (18) of the second ply extends to the first bead but does not wrap around the first bead core (12), and wherein the second side (34) of the second ply extends to the second bead but does not wrap around the second bead core (12).

5. The tire of claim 2 wherein the first side (36) of the third ply extends to the first bead and wraps partially around the first bead core (12), wherein the second side (38) of the third ply extends to the second bead and wraps partially around the second bead core (12), wherein the first side (18) of the second ply extends to the first bead and wraps partially around the first bead core (12), and wherein the second side (34) of the second ply extends to the second bead and wraps partially around the second bead core (12).

6. The tire of claim 2 wherein the first side (36) of the third ply extends to the first bead and wraps around the first bead core (12), wherein the second side (38) of the third ply extends to the second bead and wraps around the second bead core (12), wherein the first side (18) of the second ply extends to the first bead and wraps around the first bead core (12), and wherein the second side (34) of the second ply extends to the second bead and wraps around the second bead core (12), and, optionally, wherein the first side (18) of the second radial ply extends around the first bead core and the second side (34) of the second radial ply extends around the second bead core.

7. The tire of claim 2 wherein the first side (36) of the third radial ply extends around the first bead core and the second side (38) of the third radial ply extends around the second bead core.

8. The tire of claim 2 wherein the first side (36) of the third radial ply (36, 38) is at an angle of between 75º to 105º or at least approximately of between 75º to 105º with respect to a center line (54) of the carcass parallel with the bead cores (32) and the second side (38) of the third radial ply (36, 38) is at an angle of between -75º to -105º or at least approximately of between -75º to -105º with respect to said center line (54).

9. The tire carcass of at least one of the previous claims wherein the first side (18) of the second radial ply (18, 34) is at an angle of 75º or at least approximately 75º with respect to a center line (54) of the carcass parallel with the bead cores (32) and the second side (34) of the second radial ply is at an angle of -75º or at least approximately -75º with respect to said center line (54); or wherein the first side (18) of the second radial ply (18, 34) is at an angle of 105º or at least approximately 105º with respect to a center line (54) of the carcass parallel with the bead cores (32) and the second side (34) of the second radial ply is at an angle of -105º or at least approximately -105º with respect to said center line (54); or wherein the first side (18) of the second radial ply (18, 34) is at an angle of 90º or at least 90º with respect to a center line (54) of the carcass parallel with the bead cores (32) and the second side (34) of the second radial ply is at an angle of -90º or at least -90º with respect to said center line (54).

10. The tire carcass of at least one of the previous claims wherein the first side (36) of the third radial ply (36, 38) is at an angle of 75º or at least approximately 75º with respect to a center line (54) of the carcass parallel with the bead cores (32) and the second side (38) of the third radial ply (36, 38) is at an angle of -75º or at least approximately -75º with respect to said center line (48); or wherein the first side (36) of the third radial ply (36, 38) is at an angle of 105º or at least approximately 105º with respect to a center line (54) of the carcass parallel with the bead cores (32) and the second side (38) of the third radial ply (36, 38) is at an angle of -105º or at least approximately -105º with respect to said center line (54); or wherein the first side (36) of the third radial ply (36, 38) is at an angle of 90º or at least 90º with respect to a center line (54) of the carcass parallel with the bead cores (32) and the second side (38) of the third radial ply is at an angle of -90º or at least -90º with respect to said center line (54).

11. The tire carcass of at least one of the previous claims wherein the angle of the first side (36) of the third radial ply (36, 38) is the same than the angle of the first side (18) of the second radial ply (18, 34) and/or wherein the angle of the second side (38) of the third radial ply (36, 38) is the same than the angle of the second side (34) of the second radial ply (18, 34).

12. The tire carcass of at least one of the previous claims wherein the first radial ply (20) is at a greater angle with respect to a center line (48) of the carcass (10) perpendicular to the bead cores (32) than the angle of the first and second sides (18, 34, 36, 38) of the second and third plies.

13. The tire carcass of at least one of the previous claims wherein the first and second sides (18, 34) of the second radial ply have a combined width that is half or approximately half of a width of the first radial ply (20), and/or wherein the first and second sides (18, 34, 36, 38) of the second and third radial ply have a combined width that is half or approximately half of a width of the first radial ply (20).

14. The tire carcass of at least one of the previous claims wherein the first radial ply (20) is a continuous ply extending from the first to the second bead core (32).

15. A pneumatic tire comprising a carcass (10) according to one of the previous claims, and, optionally, further comprising a belt (28).

## Patentansprüche

1. Reifenkarkasse, umfassend eine erste radiale Lage (20) mit Schulterteilen und seitlichen Randteilen, wobei jeder der seitlichen Randteile um einen jeweiligen ersten oder zweiten Wulstkern (12) eines jeweiligen ersten oder zweiten Wulsts herumgeschlagen ist; einen Karkassenzenitteil (14) mit einem ersten Rand (16) und einem zweiten Rand (16'), und eine nicht-kontinuierliche zweite radiale Lage, wobei die zweite radiale Lage eine erste Seite (18), die sich von dem ersten Rand (16) oder annähernd dem ersten Rand (16) des Karkassenzenitteils (14) nach unten zu dem ersten Wulst erstreckt, und eine zweite Seite (34), die sich von dem zweiten Rand (16') oder annähernd dem zweiten Rand (16') des Karkassenzenitteils (14) nach unten zu dem zweiten Wulst erstreckt, **dadurch gekennzeichnet, dass** die erste Seite (18) der zweiten radialen Lage (18, 34) sich in einem Winkel von zwischen 75° bis 105° oder mindestens annähernd von zwischen 75° bis 105° in Bezug auf eine Mittellinie (54) der Karkasse parallel zu den Wulstkernen (32) befindet und die zweite Seite (34) der zweiten radialen Lage sich in einem Winkel von zwischen -75° bis -105° oder mindestens annähernd von zwischen -75° bis -105° in Bezug auf besagte Mittellinie (54) befindet.

2. Reifen nach Anspruch 1, wobei die Reifenkarkasse (10) weiter eine nicht-kontinuierliche dritte radiale Lage umfasst, wobei die dritte radiale Lage eine erste Seite (36) aufweist, die sich von dem ersten Rand (16) des Karkassenzenitteils (14) oder annähernd dem ersten Rand (16) des Karkassenzenitteils (14) und nach unten zu dem ersten Wulst erstreckt, und eine zweite Seite (38), die sich von dem zweiten Rand (16') oder annähernd dem zweiten Rand (16') des Karkassenzenitteils (14) nach unten zu dem zweiten Wulst erstreckt, aufweist, wobei die erste Seite (36) der dritten radialen Lage über der ersten Seite (18) der zweiten radialen Lage liegt oder gestaffelt über dieser liegt und die zweite Seite (38) der dritten radialen Lage über der zweiten Seite (34) der zweiten radialen Lage liegt oder gestaffelt über dieser liegt.

3. Reifen nach Anspruch 2, wobei die erste Seite (36) der dritten Lage gestaffelt über der ersten Seite (18) der zweiten radialen Lage liegt und wobei die zweite Seite (38) der dritten Lage gestaffelt über der zweiten Seite (34) der zweiten radialen Lage liegt und, optional, wobei die dritte Lage und die zweite Lage auch an den Wulstbereichen (32) gestaffelt sind.

4. Reifen nach Anspruch 2, wobei die erste Seite (36) der dritten Lage sich bis zu dem ersten Wulst erstreckt, jedoch nicht um den ersten Wulstkern (12) herumgeschlagen ist, wobei die zweite Seite (38) der dritten Lage sich bis zu dem zweiten Wulst erstreckt, jedoch nicht um den zweiten Wulstkern (12) herumgeschlagen ist, wobei die erste Seite (18) der zweiten Lage sich zu dem ersten Wulst erstreckt, jedoch nicht um den ersten Wulstkern (12) herumgeschlagen ist, und wobei die zweite Seite (34) der zweiten Lage sich bis zu dem zweiten Wulst erstreckt, jedoch nicht um den zweiten Wulstkern (12) herumgeschlagen ist.

5. Reifen nach Anspruch 2, wobei die erste Seite (36) der dritten Lage sich bis zu dem ersten Wulst erstreckt und teilweise um den ersten Wulstkern (12) herumgeschlagen ist, wobei die zweite Seite (38) der dritten Lage sich bis zu dem zweiten Wulst erstreckt und teilweise um den zweiten Wulstkern (12) herumgeschlagen ist, wobei die erste Seite (18) der zweiten Lage sich bis zu dem ersten Wulst erstreckt und teilweise um den ersten Wulstkern (12) herumgeschlagen ist, und wobei die zweite Seite (34) der zweiten Lage sich bis zu dem zweiten Wulst erstreckt und teilweise um den zweiten Wulstkern (12) herumgeschlagen ist.

6. Reifen nach Anspruch 2, wobei die erste Seite (36) der dritten Lage sich bis zu dem ersten Wulst erstreckt und um den ersten Wulstkern (12) herumgeschlagen ist, wobei die zweite Seite (38) der dritten Lage sich bis zu dem zweiten Wulst erstreckt und um den zweiten Wulstkern (12) herumgeschlagen ist, wobei die erste Seite (18) der zweiten Lage sich bis zu dem ersten Wulst erstreckt und um den ersten Wulstkern (12) herumgeschlagen ist, und wobei die zweite Seite (34) der zweiten Lage sich bis zu dem zweiten Wulst erstreckt und um den zweiten Wulstkern (12) herumgeschlagen ist, und, optional, wobei die erste Seite (18) der zweiten radialen Lage sich um den ersten Wulstkern erstreckt und die zweite Seite (34) der zweiten radialen Lage sich um den zweiten Wulstkern erstreckt.

7. Reifen nach Anspruch 2, wobei die erste Seite (36) der dritten radialen Lage sich um den ersten Wulstkern erstreckt und die zweite Seite (38) der dritten radialen Lage sich um den zweiten Wulstkern erstreckt.

8. Reifen nach Anspruch 2, wobei die erste Seite (36) der dritten radialen Lage (36, 38) sich in einem Winkel von zwischen 75° bis 105° oder mindestens annähernd von zwischen 75° bis 105° in Bezug auf eine Mittellinie (54) der Karkasse parallel zu den Wulstkernen (32) befindet und die zweite Seite (38) der dritten radialen Lage (36, 38) sich in einem Winkel von zwischen -75° bis -105° oder mindestens annähernd von zwischen -75° bis -105° in Bezug auf besagte Mittellinie (54) befindet.

9. Reifenkarkasse nach mindestens einem der vorgenannten Ansprüche, wobei die erste Seite (18) der zweiten radialen Lage (18, 34) sich in einem Winkel von 75° oder mindestens annähernd 75° in Bezug auf eine Mittellinie (54) der Karkasse parallel zu den Wulstkernen (32) befindet und die zweite Seite (34) der zweiten radialen Lage sich in einem Winkel von -75° oder mindestens annähernd -75° in Bezug auf besagte Mittellinie (54) befindet; oder wobei die erste Seite (18) der zweiten radialen Lage (18, 34) sich in einem Winkel von 105° oder mindestens annähernd 105° in Bezug auf eine Mittellinie (54) der Karkasse parallel zu den Wulstkernen (32) befindet und die zweite Seite (34) der zweiten radialen Lage sich in einem Winkel von -105° oder mindestens annähernd -105° in Bezug auf besagte Mittellinie (54) befindet; oder wobei die erste Seite (18) der zweiten radialen Lage (18, 34) sich in einem Winkel von 90° oder mindestens 90° in Bezug auf eine Mittellinie (54) der Karkasse parallel zu den Wulstkernen (32) befindet und die zweite Seite (34) der zweiten radialen Lage sich in einem Winkel von -90° oder mindestens -90° in Bezug auf besagte Mittellinie (54) befindet.

10. Reifenkarkasse nach mindestens einem der vorgenannten Ansprüche, wobei die erste Seite (36) der dritten radialen Lage (36, 38) sich in einem Winkel von 75° oder mindestens annähernd 75° in Bezug auf eine Mittellinie (54) der Karkasse parallel zu den Wulstkernen (32) befindet und die zweite Seite (38) der dritten radialen Lage (36, 38) sich in einem Winkel von -75° oder mindestens annähernd -75° in Bezug auf besagte Mittellinie (48) befindet; oder wobei die erste Seite (36) der dritten radialen Lage (36, 38) sich in einem Winkel von 105° oder mindestens annähernd 105° in Bezug auf eine Mittellinie (54) der Karkasse parallel zu den Wulstkernen (32) befindet und die zweite Seite (38) der dritten radialen Lage (36, 38) sich in einem Winkel von -105° oder mindestens annähernd -105° in Bezug auf besagte Mittellinie (54) befindet; oder wobei die erste Seite (36) der dritten radialen Lage (36, 38) sich in einem Winkel von 90 ° oder mindestens 90 ° in Bezug auf eine Mittellinie (54) der Karkasse parallel zu den Wulstkernen (32) befindet und die zweite Seite (38) der dritten radialen Lage sich in einem Winkel von -90° oder mindestens -90° in Bezug auf besagte Mittellinie (54) befindet.

11. Reifenkarkasse nach mindestens einem der vorgenannten Ansprüche, wobei der Winkel der ersten Seite (36) der dritten radialen Lage (36, 38) der gleiche ist wie der Winkel der ersten Seite (18) der zweiten radialen Lage (18, 34), und/oder wobei der Winkel der zweiten Seite (38) der dritten radialen Lage (36, 38) der gleiche ist wie der Winkel der zweiten Seite (34) der zweiten radialen Lage (18, 34).

12. Reifenkarkasse nach mindestens einem der vorgenannten Ansprüche, wobei die erste radiale Lage (20) sich in Bezug auf eine Mittellinie (48) der Karkasse (10) lotrecht zu den Wulstkernen (32) unter einem größeren Winkel befindet als der Winkel der ersten und zweiten Seiten (18, 34, 36, 38) der zweiten und dritten Lage.

13. Reifenkarkasse nach mindestens einem der vorgenannten Ansprüche, wobei die erste und zweite Seite (18, 34) der zweiten radialen Lage eine kombinierte Breite aufweisen, die die Hälfte oder annähernd die Hälfte einer Breite der ersten radialen Lage (20) beträgt, und/oder wobei die ersten und/oder zweiten Seiten (18, 34, 36, 38) der zweiten und dritten radialen Lage eine kombinierte Breite aufweisen, die die Hälfte oder annähernd die Hälfte einer Breite der ersten radialen Lage (20) beträgt.

14. Reifenkarkasse nach mindestens einem der vorgenannten Ansprüche, wobei die erste radiale Lage (20) eine kontinuierliche Lage ist, die sich von dem ersten zu dem zweiten Wulstkern (32) erstreckt.

15. Luftreifen, umfassend eine Reifenkarkasse (10) nach einem der vorgenannten Ansprüche und optional weiter einen Gürtel (28) umfassend.

## Revendications

1. Carcasse de bandage pneumatique comprenant une première nappe radiale (20) comportant des portions d'épaulements et des portions marginales latérales, chaque portion marginale latérale venant s'enrouler autour d'une première ou d'une deuxième tringle de talon respective (12) d'un premier et d'un deuxième talon respectif ; une portion de sommet de carcasse (14) possédant un premier bord (16) et un deuxième bord (16') ; et une deuxième nappe radiale non continue, la deuxième nappe radiale possédant un premier côté (18) s'étendant depuis le premier bord (16) ou approximativement le premier bord (16) de la portion de sommet de carcasse (14) vers le bas jusqu'au premier talon et un deuxième côté (34) s'étendant depuis le deuxième bord (16') ou approximativement le deuxième bord (16') de la portion de sommet de carcasse en direction du deuxième talon, **caractérisée en ce que** le premier côté (18) de la deuxième nappe radiale (18, 34) forme un angle entre 75° et 105° ou au moins approximativement entre 75° et 105° par rapport à une ligne médiane (54) de la carcasse parallèle aux tringles de talons (32) et le deuxième côté (34) de la deuxième nappe radiale forme un angle entre -75° et -105° ou au moins approximativement entre -75° et -105° par rapport à ladite ligne médiane (54).

2. Bandage pneumatique selon la revendication 1, dans lequel la carcasse du bandage pneumatique (10) comprend en outre une troisième nappe radiale non continue, la troisième nappe radiale possédant un premier côté (36) s'étendant depuis le premier bord (16) ou approximativement le premier bord (16) de la portion de sommet de carcasse (14) et vers le bas jusqu'au premier talon et un deuxième côté (38) s'étendant depuis le deuxième bord (16') ou approximativement le deuxième bord (16') de la portion de sommet de carcasse (14) vers le bas jusqu'au deuxième talon, le premier côté (36) de la troisième nappe radiale recouvrant ou recouvrant en quinconce le premier côté (18) de la deuxième nappe radiale, et le deuxième côté (38) de la troisième nappe radiale recouvrant ou recouvrant en quinconce le deuxième côté (34) de la deuxième nappe radiale.

3. Bandage pneumatique selon la revendication 2, dans lequel le premier côté (36) de la troisième nappe recouvre le premier côté (18) de la deuxième nappe radiale en quinconce, et dans lequel le deuxième côté (38) de la troisième nappe recouvre le deuxième côté (34) de la deuxième nappe radiale en quinconce, et, de manière facultative, dans lequel la troisième nappe et la deuxième nappe sont disposées également en quinconce dans les zones de talons (32).

4. Bandage pneumatique selon la revendication 2, dans lequel le premier côté (36) de la troisième nappe s'étend jusqu'au premier talon, mais ne vient pas s'enrouler autour de la première tringle de talon (12), le deuxième côté (38) de la troisième nappe s'étend jusqu'au deuxième talon, mais ne vient pas s'enrouler autour de la deuxième tringle de talon (12), le premier côté (18) de la deuxième nappe s'étendant jusqu'au premier talon, mais ne venant pas s'enrouler autour de la première tringle de talon (12), et le deuxième côté (34) de la deuxième nappe s'étendant jusqu'au deuxième talon, mais ne venant pas s'enrouler autour de la deuxième tringle de talon (12).

5. Bandage pneumatique selon la revendication 2, dans lequel le premier côté (36) de la troisième nappe s'étend jusqu'au premier talon et vient s'enrouler en partie autour de la première tringle de talon (12), le deuxième côté (38) de la troisième nappe s'étend jusqu'au deuxième talon et vient s'enrouler en partie autour de la deuxième tringle de talon (12), le premier côté (18) de la deuxième nappe s'étendant jusqu'au premier talon et venant s'enrouler en partie autour de la première tringle de talon (12), et le deuxième côté (34) de la deuxième nappe s'étendant jusqu'au deuxième talon et venant s'enrouler en partie autour de la deuxième tringle de talon (12).

6. Bandage pneumatique selon la revendication 2, dans lequel le premier côté (36) de la troisième nappe s'étend jusqu'au premier talon et vient s'enrouler autour de la première tringle de talon (12), le deuxième côté (38) de la troisième nappe s'étend jusqu'au deuxième talon et vient s'enrouler autour de la deuxième tringle de talon (12), le premier côté (18) de la deuxième nappe s'étendant jusqu'au premier talon et venant s'enrouler autour de la première tringle de talon (12), et dans lequel le deuxième côté (34) de la deuxième nappe s'étend jusqu'au deuxième talon et vient s'enrouler autour de la deuxième tringle de talon (12), le cas échéant, dans lequel le premier côté (18) de la deuxième nappe radiale s'étend autour de la première tringle de talon et le deuxième côté (34) de la deuxième nappe radiale s'étend autour de la deuxième tringle de talon.

7. Bandage pneumatique selon la revendication 2, dans lequel le premier côté (36) de la troisième nappe radiale s'étend autour de la première tringle de talon et le deuxième côté (38) de la troisième nappe radiale s'étend autour de la deuxième tringle de talon.

8. Bandage pneumatique selon la revendication 2, dans lequel le premier côté (36) de la troisième nappe radiale (36, 38) forme un angle entre 75° et 105° ou au moins approximativement entre 75° et 105° par rapport à une ligne médiane (54) de la carcasse parallèle aux tringles de talons (32) et le deuxième côté (38) de la troisième nappe radiale (36, 38) forme un angle entre - 75° et -105° ou au moins approximativement entre -75° et -105° par rapport à ladite ligne médiane (54).

9. Carcasse de bandage pneumatique selon au moins une des revendications précédentes, dans lequel le premier côté (18) de la deuxième nappe radiale (18, 34) forme un angle de 75° ou un angle d'au moins approximativement 75° par rapport à une ligne médiane (54) de la carcasse parallèle aux tringles de talons (32), et le deuxième côté (34) de la deuxième nappe radiale forme un angle de -75° ou un angle d'au moins approximativement -75° par rapport à ladite ligne médiane (54) ; ou dans lequel le premier côté (18) de la deuxième nappe radiale (18, 34) forme un angle de 105° ou un angle d'au moins approximativement 105° par rapport à une ligne médiane (58) de la carcasse parallèle aux tringles de talons (32), et le deuxième côté (34) de la deuxième nappe radiale forme un angle de -105° ou un angle d'au moins approximativement -105° par rapport à ladite ligne médiane (54) ; ou dans lequel le premier côté (18) de la deuxième nappe radiale (18, 34) forme un angle de 90° ou d'au moins 90° par rapport à une ligne médiane (54) de la carcasse parallèle aux tringles de talon (32) et le deuxième côté (34) de la deuxième nappe radiale forme un angle de -90° ou d'au moins -90° par rapport à ladite ligne médiane (54).

10. Carcasse de bandage pneumatique selon au moins une des revendications précédentes, dans laquelle le premier côté (36) de la troisième nappe radiale (36, 38) forme un angle de 75° ou d'au moins approximativement 75° par rapport à une ligne médiane (54) de la carcasse parallèle aux tringles de talons (32) et le deuxième côté (38) de la troisième nappe radiale (36, 38) forme un angle de -75° ou d'au moins approximativement -75° par rapport à ladite ligne médiane (54) ; ou dans laquelle le premier côté (36) de la troisième nappe radiale (36, 38) forme un angle de 105° ou d'au moins approximativement 105° par rapport à une ligne médiane (54) de la carcasse parallèle aux tringles de talons (32) et le deuxième côté (38) de la troisième nappe radiale (36, 38) forme un angle de -105° ou d'au moins approximativement -105° par rapport à ladite ligne médiane (54) ; ou dans laquelle le premier côté (36) de la troisième nappe radiale (36, 38) forme un angle de 90° ou d'au moins approximativement 90° par rapport à une ligne médiane (54) de la carcasse parallèle aux tringles de talons (32) et le deuxième côté (38) de la troisième nappe radiale forme un angle de -90° ou d'au moins -90° par rapport à ladite ligne médiane (54).

11. Carcasse de bandage pneumatique selon au moins une des revendications précédentes, dans laquelle l'angle formé par le premier côté (36) de la troisième nappe radiale (36, 38) est égal à l'angle formé par le premier côté (18) de la deuxième nappe radiale (18, 34) et/ou dans laquelle l'angle formé par le deuxième côté (38) de la troisième nappe radiale (36, 38) est égal à l'angle formé par le deuxième côté (34) de la deuxième nappe radiale (18, 34).

12. Carcasse de bandage pneumatique selon au moins une des revendications précédentes, dans laquelle la première nappe radiale (20) forme un angle par rapport à une ligne médiane (48) de la carcasse (10) perpendiculaire aux tringles de talons (32) qui est supérieur à l'angle formé par le premier et le deuxième côté (18, 34, 36, 38) des deuxième et troisième nappes.

13. Carcasse de bandage pneumatique selon au moins une des revendications précédentes, dans laquelle les premier et deuxième côtés (18, 34) de la deuxième nappe radiale possèdent une largeur combinée qui représente la moitié ou approximativement la moitié de la largeur de la première nappe radiale (20), et/ou dans laquelle le premier et le deuxième côté (18, 34, 36, 38) des deuxième et troisième nappes possèdent une largeur combinée qui représente la moitié ou approximativement la moitié de la largeur de la première nappe radiale.

14. Carcasse de bandage pneumatique selon au moins une des revendications précédentes, dans laquelle la première nappe radiale (20) est une nappe continue s'étendant de la première à la deuxième tringle de talon (32).

15. Bandage pneumatique comprenant une carcasse (10) selon l'une quelconque des revendications précédentes et, le cas échéant, comprenant en outre une ceinture (28).
